# EUROPEAN PATENT SPECIFICATION

(11) **EP 0 727 335 B1**
(45) Date of publication and mention of the grant of the patent: **10.10.2001**
(21) Application number: 96830029.3
(22) Date of filing: 25.01.1996
(51) Int. Cl.: B60R 16/02

(54) **Safety sectioning main switch for automatically sectioning electric loads in motor vehicles and the like**
Sicherheitstrennungsschalter zur automatischen Trennung elektrischer Lasten in Kraftfahrzeugen oder dergleichen
Interrupteur sectionneur de sécurité pour le sectionnement automatique de charges électriques dans des véhicules automobiles et similaires

(30) Priority: 15.02.1995 IT MI950277
(43) Date of publication of application: 21.08.1996
(73) Proprietor: CAVIS S.r.l., I-15023 Felizzano (Alessandria) (IT)
(72) Inventor: Moscariello, Mario, 15023 - Felizzano (Alessandria) (IT)
(74) Representative: Cicogna, Franco

(56) References cited:
- EP-A- 0 013 779
- DE-A- 2 341 637
- DE-A- 2 902 718
- DE-A- 3 116 867
- DE-A- 4 015 816
- GB-A- 2 247 560
- US-A- 3 882 957

## Description

### BACKGROUND OF THE INVENTION

The present invention relates to a safety sectioning main switch for automatically sectioning electric loads in motor vehicles and the like.

As is known, in a motor vehicle it would be very advantageous to switch-off the electric current supplied by the battery power supply, as the motor vehicle is involved in a serious accident, in order to prevent dangerous shorts or sparkles from occurring.

Prior solutions to the above mentioned problem, however, have not been found to be satisfactory, since they are very complex from a constructional standpoint and, moreover, their operation is not reliable.

The document DE-A-2 902 718 discloses a safety sectioning main switch according to the preamble of Claim 1.

### SUMMARY OF THE INVENTION

Accordingly, the aim of the present invention is to solve the above mentioned problem, by providing a safety main sectioning switch, for automatically switching-off or sectioning electric loads, in particular for motor vehicles and the like, which is specifically designed for automatically operating to switch-off the electric loads of a motor vehicle in the case of a serious impact or accident of the latter, while holding some preferred loads in a connected relationship, said preferred loads including, for example, the door locking devices, and the motor vehicle compartment inner lights.

Within the scope of the above mentioned aim, a main object of the present invention is to provide such a safety main sectioning switch which is suitable to also protect the privileged loads held in an on condition, this by a device which does not require any maintenance and which, moreover, is of a recovering type, i.e. suitable to automatically recover as the conditions causing the operation thereof have been released.

Another object of the present invention is to provide a safety main switch for automatically switching-off electric loads in motor vehicles and the like, which, owing to its specifically designed construction is very safe and reliable in operation.

Yet another object of the present invention is to provide such a sectioning main switch which can be easily made, starting from easily available elements and materials and which, moreover, is very competitive from a mere economic standpoint.

According to one aspect of the present invention, the above mentioned aim and objects, as well as yet other objects, which will become more apparent hereinafter, are achieved by a safety sectioning main switch, according to claim 1.

### BRIEF DESCRIPTION OF THE DRAWINGS

Further characteristics and advantages of the invention will become more apparent hereinafter from the following detailed disclosure of a preferred, though not exclusive, embodiment of a safety sectioning main switch for automatically switching-off electrical loads in motor vehicles and the like, which is illustrated, by way of an indicative, but not limitative, example, in the figures of the accompanying drawings, where:
Figure 1 illustrates an electric diagram of the safety sectioning main switch according to the present invention;

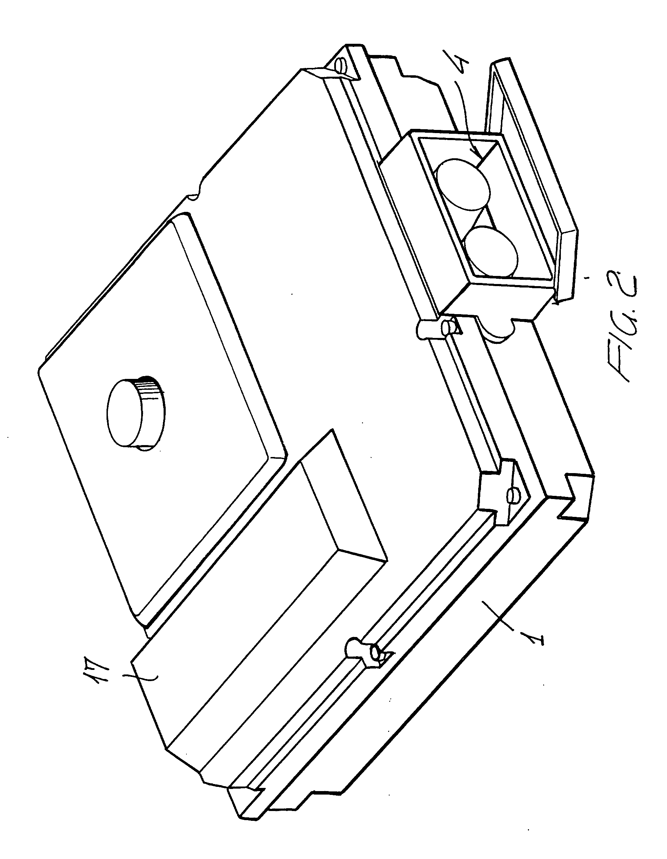

Figure 2 is a schematic perspective view of the sectioning main switch according to the present invention, and clearly shows the outer casing thereof; and

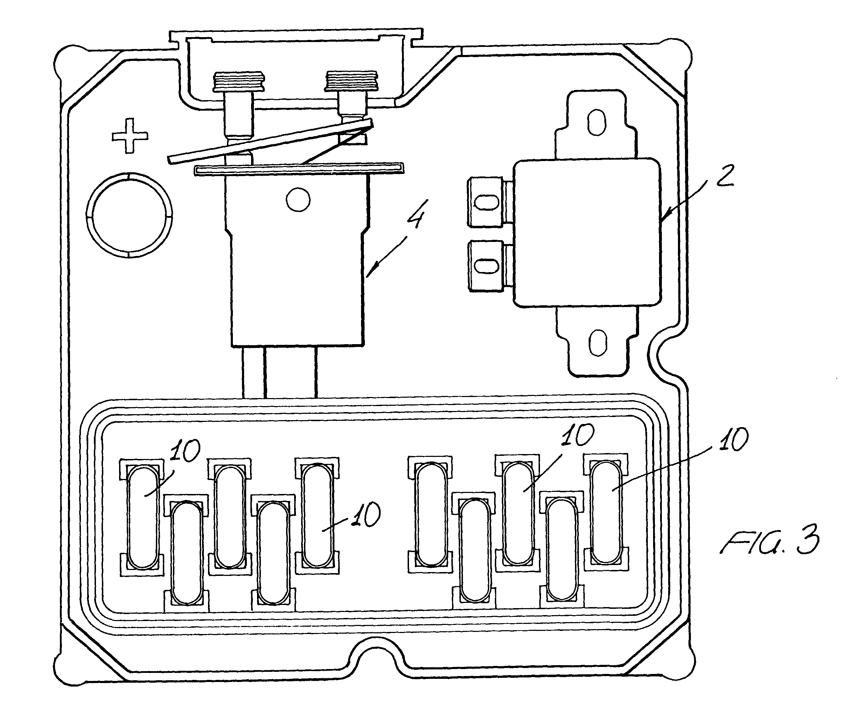

Figure 3 is another schematic view illustrating the main switch inside its casing.

### DESCRIPTION OF THE PREFERRED EMBODIMENT

With reference to the number references of the above mentioned figures, the safety sectioning main switch for automatically switching-off electric loads, which has been specifically designed for motor vehicles and the like, according to the present invention, comprises, inside a box-like casing 1, which is preferably of a sealed type, a contactor or electromagnetic switch 2, which is normally driven to a closed condition by the starting key of the motor vehicle and is driven by an outer control device, which can comprise either an inertial switch 3, or any other mechanical or electronic device suitable to cause the contactor or electromagnetic switch 2 to open in the case of an impact of the motor vehicle.

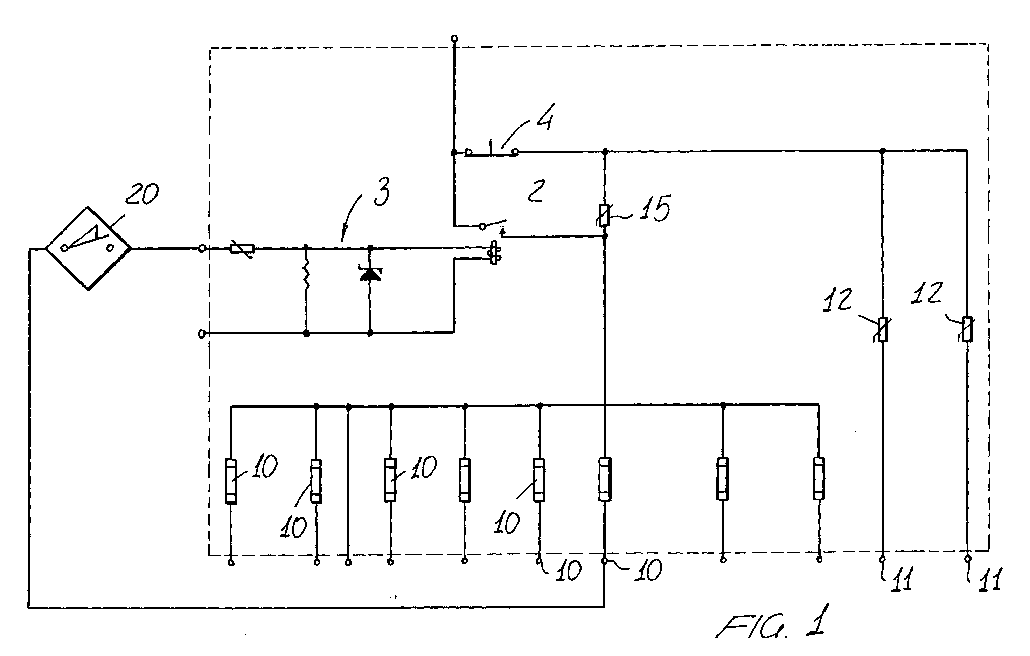

The contactor 2, as is clearly shown in Figure 1, is arranged in parallel with respect to a manual switch 4, which control the power supply of all of the electric loads, and in particular, of the so-called regular or ordinary electric loads and of the privileged electric loads.

The ordinary loads, which are shown by the respective safety fuses 10, are controlled by the contactor 2, whereas the privileged electric loads, indicated by the reference number 11, are directly coupled to the line of the manual switch 4 and are controlled by a temperature sensitive device, which, advantageously, comprises a PTC 12.

The latter is a solid status type of device which, as the inner temperature increases, causes the electric resistance thereof to increase so as to prevent electric current from passing therethrough.

As the normal operation condition are recovered, the value of the electric resistance will return to a regular value, thereby allowing the electric current to pass again.

As shown, on the connection branch of the parallel connection of the contactor 2 and switch 4, is provided a safety PTC 15 which, in operation, will allow current to pass therethrough during the starting steps, as a key switch 20 is operated, for allowing the inertial switch 3 to be properly power supplied.

The electric fuses, indicated by the reference number 10, arranged at the regular electric loads, can be provided in any suitable numbers, and depending on the particular electric loads to be switched-off in the case of an impact and/or accident.

As shown, the fuses 10 are arranged near a door 17, provided on the casing 1, to allow said fuses to be easily accessed.

Owing to the provision of the safety sectioning main switch according to the present invention, upon an impact the differential or inertial switch 3 will trip so as to remove electric current from all of the ordinary loads, whereas the privileged electric loads will be continuously supplied with current, said privileged loads being held in a connected condition through the manual switch 4 and the PTC 12.

By switching-off the manual switch 4 too, the battery of the motor vehicle will be disconnected from all of the electric loads, which would be particularly useful if the motor vehicle is left in a not use condition for long time, thereby preventing the motor vehicle battery from discharging.

From the above disclosure it should be apparent that the invention fully achieves the intended aim and objects.

In particular, the fact is to be pointed out that a sectioning main switch has been provided which allows, even in an impact condition, some privileged electric loads of the motor vehicle to be continuously power supplied, such as, for example, the door locking devices and possibly the inner lights, which would be very useful in an accident event.

Moreover, the provision of solid state devices for protecting the mentioned privileged loads will provide a maintenance-free arrangement, since these devices are suitable to self-recover and, moreover, have a high reliability and duration.

In this connection it should be moreover pointed out that the casing 1 is advantageously of a sealed type and of an impact-proof type.

## Claims

1. A safety sectioning main switch, for automatically switching-off electric loads, in particular for motor vehicles and the like, comprising a contactor (2) driven by an outer driving device (3) and which controls the electric power supply of electric loads to automatically switch-off said electric loads in the case of an impact of the motor vehicle, privileged electric loads (11) controlled by a temperature sensitive device being moreover provided, said outer device (3) comprising an inertial switch (3) or a mechanical or the like device, driving said contactor (2), said main switch comprising moreover, in parallel with said contactor (2), a manual control switch (4) controlling the power supply to the electric loads and privileged electric loads (11), **characterized in that** said temperature sensitive device controlling said privileged electric loads (11) comprises a solid state device (12) the electric resistance whereof increases as the inner temperature is increased, in order to prevent electric current from passing and suitable to recover the electric resistance value to a normal value as the normal operation conditions are recovered.

2. A safety sectioning main switch, according to Claim 1, **characterized in that** said main switch comprises moreover a temperature sensitive device (15) arranged, on the connection branch, in parallel between said contactor (2) and manual switch (4).

3. A safety sectioning main switch, according to Claims 1 and 2, **characterized in that** said main switch is arranged in an impact proof and sealed casing (1).

4. A safety sectioning main switch, according to one or more of the preceding claims, **characterized in that** said casing (1) is provided with an openable door (17) arranged near the electric load protecting fuses (10).

5. A safety sectioning main switch, according to one or more of the preceding claims, **characterized in that** it is rigidly assembled on the battery without the interposition of any connection cables.

## Patentansprüche

1. Sicherheitstrennungshauptschalter zur automatischen Abschaltung elektrischer Lasten insbesondere in Kraftfahrzeugen oder dergleichen, mit einem durch eine äußere Antriebsvorrichtung (3) angetriebenen Schaltschütz (2), das die Zufuhr von elektrischer Energie zu elektrischen Lasten bei einem Aufprall des Kraftfahrzeuges steuert, um die elektrischen Lasten bei einem Aufprall des Kraftfahrzeuges automatisch abzuschalten, wobei bevorrechtigte elektrische Lasten (11) durch eine darüber hinaus vorgesehene temperaturempfindliche Vorrichtung gesteuert werden, die äußere Vorrichtung (3) einen Trägheitsschalter (3) oder eine mechanische oder ähnliche Vorrichtung aufweist, die das Schaltschütz (2) antreibt, wobei der Hauptschalter darüber hinaus parallel zu dem Schaltschütz (2) einen Handsteuerschalter (4) aufweist, der die Stromzufuhr zu den elektrischen Lasten sowie die bevorrechtigten elektrischen Lasten (11) steuert,
**dadurch gekennzeichnet, daß**
die die bevorrechtigten elektrischen Lasten (11) steuernde temperaturempfindliche Vorrichtung einen Festkörperbaustein (12) aufweist, dessen elektrischer Widerstand sich mit dem Anstieg der Innentemperatur erhöht, um den Durchfluß von elektrischem Strom zu verhindern, und der zur Wiederherstellung eines normalen elektrischen Widerstandswertes in der Lage ist, wenn die normalen Betriebsbedingungen wieder hergestellt sind.

2. Sicherheitstrennungshauptschalter nach Anspruch 1,
**dadurch gekennzeichnet, daß**
der Hauptschalter darüber hinaus eine auf der Anschlußabzweigung parallel zwischen dem Schaltschütz (2) und dem Handschalter (4) angeordnete temperaturempfindliche Vorrichtung (15) aufweist.

3. Sicherheitstrennungshauptschalter nach Anspruch 1 und 2,
**dadurch gekennzeichnet, daß**
der Hauptschalter in einem aufprallfesten und abgedichteten Gehäuse (1) angeordnet ist.

4. Sicherheitstrennungshauptschalter nach einem oder mehreren der vorangegangenen Ansprüche,
**dadurch gekennzeichnet, daß**
das Gehäuse (1) mit einer in der Nähe der elektrischen Lastschutzsicherungen (10) angeordneten öffenbaren Tür (17) versehen ist.

5. Sicherheitstrennungshauptschalter nach einem oder mehreren der vorangegangenen Ansprüche,
**dadurch gekennzeichnet, daß**
er ohne Zwischenschaltung von Anschlußkabeln starr auf der Batterie montiert ist.

## Revendications

1. Interrupteur principal sectionneur de sécurité pour le sectionnement automatique de charges électriques notamment pour véhicules à moteur et similaires, comprenant un contacteur ou interrupteur électromagnétique ("contactor") (2) actionné par un dispositif d'action extérieur (3) et qui contrôle l'alimentation en puissance électrique des charges électriques pour sectionner automatiquement lesdites charges électriques dans le cas d'un impact du véhicule à moteur, des charges électriques privilégiées (11) contrôlées par un dispositif sensible à la température étant de plus prévues, ledit dispositif extérieur (3) comprenant un interrupteur inertiel (3) ou un dispositif mécanique ("mechanical") ou un dispositif similaire, actionnant ledit contacteur (2), ledit interrupteur principal comprenant de plus, en parallèle avec ledit contacteur (2), un interrupteur de contrôle manuel (4) contrôlant la puissance fournie aux charges électriques et aux charges électriques privilégiées (11), **caractérisé en ce que** ledit dispositif sensible à la température contrôlant lesdites charges électriques privilégiées (11) comprend un dispositif d'état solide (12) dont la résistance électrique augmente dès que la température intérieure augmente, dans le but d'empêcher le courant électrique de passer et est adapté pour rétablir la valeur de la résistance électrique à une valeur normale tandis que les conditions normales opératoires sont rétablies.

2. Interrupteur principal sectionneur de sécurité selon la revendication 1, **caractérisé en ce que** ledit interrupteur principal comprend de plus un dispositif sensible à la température (15) installé sur la branche de connexion, en parallèle entre ledit contacteur (2) et l'interrupteur manuel (4).

3. Interrupteur principal sectionneur de sécurité selon les revendications 1 et 2, **caractérisé en ce que** ledit interrupteur principal est installé dans un boîtier hermétique (1) résistant aux impacts.

4. Interrupteur principal sectionneur de sécurité selon l'une quelconque des revendications précédentes, **caractérisé en ce que** ledit boîtier (1) est muni d'une porte qui s'ouvre (17) installée près des fusibles de protection des charges électriques (10).

5. Interrupteur principal sectionneur de sécurité selon l'une quelconque des revendications précédentes, **caractérisé en ce qu'**il est assemblé de manière rigide sur la batterie sans intercaler aucun câble de connexion.
